Europäisches Patentamt

European Patent Office

Office européen des brevets

(19)

(11) Publication number : **0 599 252 A1**

(12) # EUROPEAN PATENT APPLICATION

(21) Application number : **93118779.3**

(22) Date of filing : **22.11.93**

(51) Int. Cl.$^5$: **H04N 5/208,** H04N 5/21, H04N 5/14

(30) Priority : **25.11.92 IT TO920952**

(43) Date of publication of application : **01.06.94 Bulletin 94/22**

(84) Designated Contracting States : **CH DE ES FR GB IT LI NL PT**

(71) Applicant : **SELECO S.p.A.**
**Viale Treviso, 15**
**I-33170 Pordenone (IT)**

(72) Inventor : **Dassie, Lucio**
**Via Casano, 30**
**I-32014 Ponte Nelle Alpi (BL) (IT)**

(74) Representative : **Dini, Roberto, Dr. Ing.**
**Via Castagnole, 59**
**I-10060 None (Torino) (IT)**

(54) **Circuit for improving the contrast of a video image utilising a second order volterra filter.**

(57) Circuit for improving the contrast of a video image comprising a non-linear filter. The filter is a modified Volterra filter, that operates on a spatial domain of a 3X3 squared window and it is obtained by truncating the development at the 2° order (k=2).

FIG. 1

EP 0 599 252 A1

The present invention relates to a contrast imroving system of a video image, utilising a non-linear filter.

It is known that the final dimension of the scanning spot of a telecamera or television tube determines a frequency response with behaviour being similar to that of a low-pass filter with a progressive roll-off; this phenomenon, unavoidable and undesired, imposes the use, at least within the limits of an improved quality television project, of a so called "opening correction" technique, substantially consisting of a filtering system of the signal of the image which emphasises the high spatial frequencies, with the aim of improving the apparent quality of the image itself, particularly the contrast.

Such techniques do however have the inconvenience of increasing the visibility of the noise components present in the signal before filtering.

The aim of the present invention is that of indicating an opening correction system minimising at the same time the consequent undesirable effects on the image signal.

For allowing such aim the present invention has as its subject a contrast imroving system of a video image, utilising a nonlinear filter, characterised in that said filter is a modified Volterra filter, that operates on a spatial domaine of a 3X3 squared window and is obtained by truncating the development at the 2° order (k=2).

Further aims and advantages of the present invention will result in being clear from the following detailed description and annexed drawings, supplied purely as an explanatory and non limiting example, wherein:

figure 1 represents the diagram of the principle of the opening correction circuit;

figure 2 represents a section of the diagram of figure 1, according to the invention;

figure 3 represent in greater detail a part of the circuit of figure 1 according to the invention.

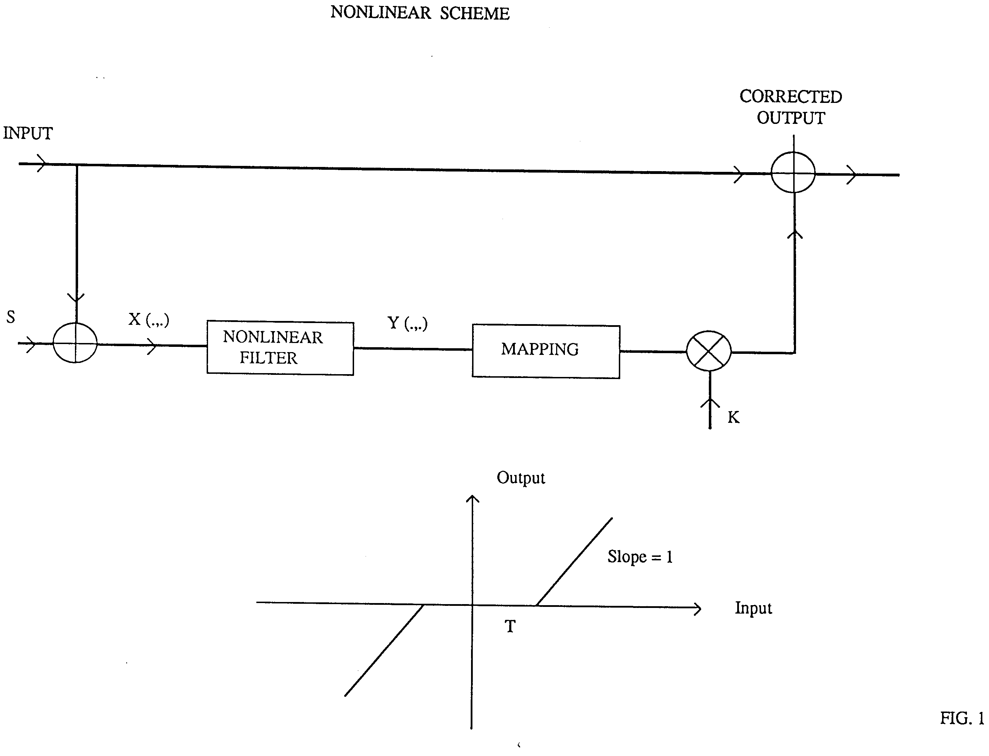

The invention is based on the idea of optimising an adaptive high-pass filter of the non-linear type, so as that the high frequency components in regions of the image of low brightness are amplified less than those present in brighter regions, so as that the noise present results in being less visible than that obtainable with a processing of the image with a linear filter. In figure 1, that represents the diagram of the principle of the opening correction circuit, it is seen how that to the direct signal an appropriately filtered version of itself is added by the non-linear filter and mapping blocks.

The non-linear filter is an appropriately modified Volterra filter; in figure 1, under the diagram the mapping function is illustrated.

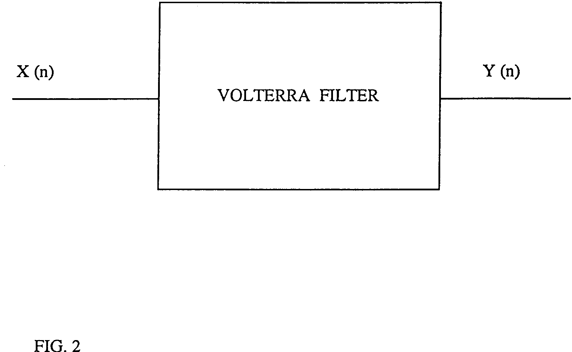

Considering the diagram of figure 2, that represents a section of the diagram in figure 1, it is possible to generally describe the relation between the input (x(n) and output y(n) by way of the equation (for instance in the unidimensional case and in the dominion of discrete time n):

$$y(n)=h_o+\sum_{k=1}^{\infty} h_k[x(n)]$$

in which $h_o$ is a constant limit and $h_k[x(n)]$ is defined by

$$h_k[x(k)]=\sum_{i_1=0}^{n-1}\ldots\sum_{i_1=0} h_k(i_1\ldots i_k)x(n-i_1)\ldots x(n-i_k)$$

and are known as Volterra nuclei of the k-th order (i.e. inferred starting from the homonymous series development of the system).

Utilising this formal description we obtain an important analytical generalisation inasmuch both the linear systems, indicated with the term k=1, $h_1(l_1)$, and the non-linear systems, indicated with the term $h_k(i_1\ldots i_k)$ are described that may be considered as a k-th extension of the impulsive response.

More precisely, the filter according to the invention operates on a spatial 3X3 squared window and is obtained by truncating the development at the 2° order (k=2) that, in the case of signal x(n) of medium value $m_i$ much greater than the variation d within the aforementioned window, it is possible to approximate as follows:

$$y(m,n) = m_i \quad [8x(m,n) - x(m,n-1) - x(m+1,n-1)$$

$$-x(m+1,n) - x(m+1,n+1) - x(m,n+1)$$

$$-x(m-1,n+1) - x(m-1,n) - x(m-1,n-1)]$$

The behaviour in frequency is that of a high-pass adaptive filter according to the medium value $m_i$ of the local brightness of the image. The result is such that the components of high frequency in regions of low brightness are amplified less than those present in brighter regions, so as that the noise being present results less visible than that which would be had with an image processing with a linear filter.

The filter according to the invention, having a squared frame along the horizontal and vertical directions, assures the spatial isotropy of the behaviour.

The architecture of the system provides the possibility of varying the accumulation K of the correction, the possibility of selecting the brightness levels in which to effect the correction (S) and eventually a non-linear block (the mapping block of figure 1) for reducing the remaining noise.

This last block discriminates the entity of the output y(.) of the non-linear filter, in the sense that it allows to pass or not the same as long that it is greater or lower than a threshold value T; as it is reasonable to suppose that the effect of the noise originates modest entities of output from the filter, the global reduction therefore results of the noise in the signal.

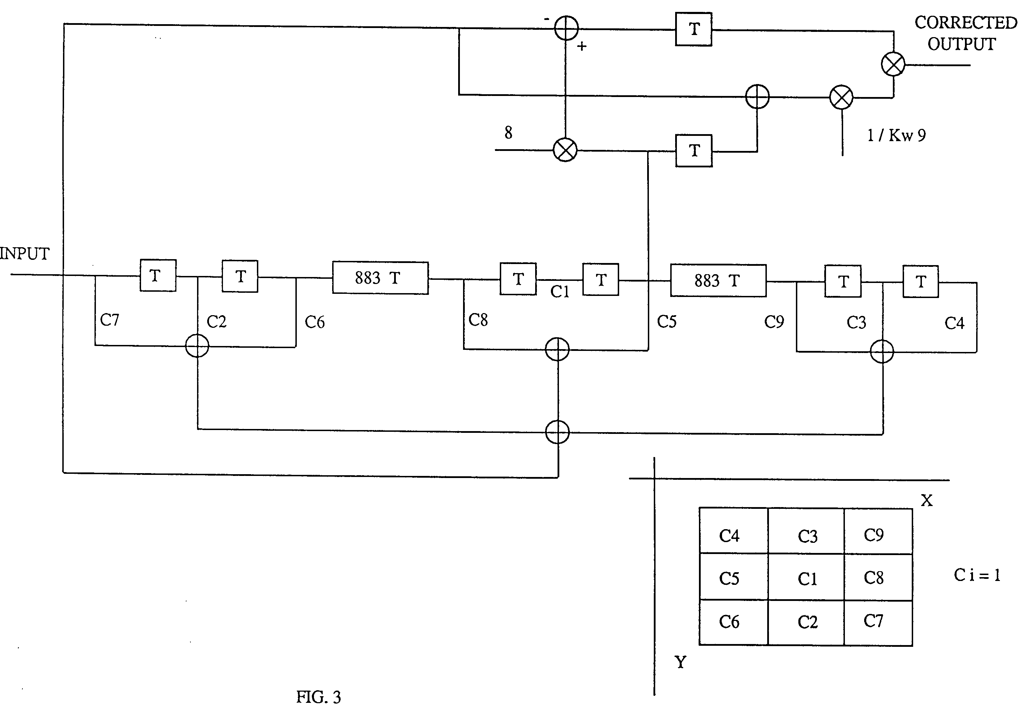

The consequent circuitry diagram is represented in figure 3, however the mapping block has nor been illustrated.

The circuit utilises a reduced number of line memories and has less remaining noise if compared with a linear solution being of equal performance of contrast improvement.

In figure 3 as in figure 1, the + within a circle represents a summing operation, whereas the x sign within a circle represents a product operation; in figure 3 the symbol T present in several blocks indicates a clock delay of one pulse.

The characteristics of the described contrast improvement system result in being clear from the description of the example.

From the given description the advantages of the system object of the present invention also result in being clear.

It is clear that numerous variant are possible by the skilled man, to the system described as an example, without for this departing from the novelty principles inherent in the invention.

**Claims**

1. Contrast improving system of a video image, utilising a nonlinear filter, characterised in that said filter is a modified Volterra filter, that operates on a spatial domain of a 3X3 squared window and is obtained by truncating the development at the 2° order (k=2).

2. Contrast improving system of a video image, according to claim 1, characterised in that it provides a non linear block (mapping, fig. 1) for further reducing the residual noise.

3. Contrast improving system of a video image, according to claim 2, characterised in that said non linear block discriminates the entity of the filter output, in the sense that it allows to pass or not the same, providing that it is greater or less than a threshold value (T).

4. Contrast improving system of a video image, according to claim 2, characterised in that said filter behaves as a high-pass filter adaptive according to the medium value $(m_i)$ of the local brightness of the image.

5. Contrast improving system of a video image, according to claim 1, characterised in that the dimensions of said spatial domain square window are 3x3..

6. Video apparatus that utilises the system according to one or more of the previous descriptions.

NONLINEAR SCHEME

INPUT

CORRECTED
OUTPUT

S

X (.,.)

NONLINEAR
FILTER

Y (.,.)

MAPPING

K

Output

Slope = 1

Input

T

EP 0 599 252 A1

FIG. 1

X (n) ——————— | VOLTERRA  FILTER | ——————— Y (n)

FIG. 2

FIG. 3

EP 0 599 252 A1

European Patent
Office

**EUROPEAN SEARCH REPORT**

Application Number

EP 93 11 8779

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | ELECTRONICS LETTERS vol. 28, no. 2 , 16 January 1992 , IEE STEVENAGE (GB) pages 180 - 182 XP000280610 LIN J. ET AL '2-D ADAPTIVE VOLTERRA FILTER FOR 2-D NONLINEAR CHANNEL EQUALISATION AND IMAGE RESTORATION' * the whole document * | 1,5 | H04N5/208 H04N5/21 H04N5/14 |
| X | ELECTRONICS LETTERS vol. 22, no. 9 , 24 April 1986 , IEE STEVENAGE (GB) pages 482 - 484 RAMPONI G. 'EDGE EXTRACTION BY A CLASS OF SECOND-ORDER NONLINEAR FILTERS' * the whole document * | 1,5 | |
| X | ELECTRONICS LETTERS vol. 23, no. 23 , 5 November 1987 , IEE STEVENAGE GB pages 1218 - 1219 RAMPONI G. ET AL 'DECISION-DIRECTED NONLINEAR FILTER FOR IMAGE PROCESSING' * the whole document * | 1,5 | TECHNICAL FIELDS SEARCHED (Int.Cl.5) H04N G06F |
| X | IEEE TRANSACTIONS ON CIRCUITS AND SYSTEMS vol. 35, no. 9 , 30 September 1988 , NEWYORK US pages 1095 - 1102 RAMPONI G. ET AL 'A COMPUTATIONAL METHOD FOR THE DESIGN OF 2D NONLINEAR VOLTERRA FILTERS' * the whole document * | 1,5 | |

-/--

The present search report has been drawn up for all claims

| Place of search | Date of completion of the search | Examiner |
|---|---|---|
| THE HAGUE | 28 March 1994 | Verschelden, J |

EPO FORM 1503 03.82 (P04C01)

**European Patent Office**

## EUROPEAN SEARCH REPORT

Application Number

EP 93 11 8779

### DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | PROCEEDINGS OF THE IEEE vol. 78, no. 4 , 30 April 1990 , NEWYORK US pages 665 - 677 RAMPONI G. 'BI-IMPULSE RESPONSE DESIGN OF ISOTROPIC QUADRATIC FILTERS' | 1,5 | |
| Y | * the whole document * | 2,3,6 | |
| Y | US-A-4 386 434 (GIBSON W. ET AL) * the whole document * | 2,3,6 | |
| A | US-A-4 991 021 (NIKOH H. ET AL) * the whole document * | 1-3,6 | |
| A | GB-A-2 142 204 (RCA CORPORATION) * the whole document * | 1-3,6 | |
| A | EP-A-0 331 017 (KABUSHIKI KAISHA TOSHIBA) * the whole document * | 1-3 | |
| A | US-A-5 034 888 (UEHARA M. ET AL) * column 11, line 32 - line 64 * | 1,5 | TECHNICAL FIELDS SEARCHED (Int.Cl.5) |
| A | IEE PROCEEDINGS G. ELECTRONIC CIRCUITS & SYSTEMS vol. 138, no. 4 , 30 August 1991 , STEVENAGE GB pages 433 - 440 XP000259462 PAPANANOS Y. ET AL 'ANALYSIS AND VLSI ARCHITECTURE OF A NONLINEAR EDGE-PRESERVING NOISE-SMOOTHING IMAGE FILTER' * the whole document * | 1,5 | |
| A | EP-A-0 352 016 (MINNESOTA MINING AND MANUFACTURING COMPANY) * page 11, line 9 - line 14 * | 1,5 | |

The present search report has been drawn up for all claims

| Place of search | Date of completion of the search | Examiner |
|---|---|---|
| THE HAGUE | 28 March 1994 | Verschelden, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)